(19) Europäisches Patentamt
European Patent Office
Office européen des brevets

(11) **EP 1 678 803 B1**

(12) **EUROPÄISCHE PATENTSCHRIFT**

(45) Veröffentlichungstag und Bekanntmachung des Hinweises auf die Patenterteilung:
**15.09.2010   Patentblatt 2010/37**

(21) Anmeldenummer: **04790534.4**

(22) Anmeldetag: **16.10.2004**

(51) Int Cl.:
**H02H 7/085** (2006.01)

(86) Internationale Anmeldenummer:
**PCT/EP2004/011698**

(87) Internationale Veröffentlichungsnummer:
**WO 2005/041378 (06.05.2005 Gazette 2005/18)**

(54) **FENSTERHEBER, STEUERUNGSVORRICHTUNG EINES FENSTERHEBERS UND VERFAHREN ZUR STEUERUNG EINES FENSTERHEBERS**

WINDOW LIFT, CONTROL DEVICE FOR A WINDOW LIFT AND METHOD FOR CONTROLLING A WINDOW LIFT

LEVE-VITRE, DISPOSITIF DE COMMANDE DE LEVE-VITRE ET PROCEDE POUR COMMANDER UN LEVE-VITRE

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.10.2003   DE 20316222 U**

(43) Veröffentlichungstag der Anmeldung:
**12.07.2006   Patentblatt 2006/28**

(73) Patentinhaber: **Brose Fahrzeugteile GmbH & Co. KG, Coburg**
**96450 Coburg (DE)**

(72) Erfinder:
• **HELD, Jochen**
**91301 Forchheim (DE)**
• **KALB, Roland**
**96269 Rossach (DE)**

(74) Vertreter: **Tergau & Pohl Patentanwälte**
**Mögeldorfer Hauptstrasse 51**
**90482 Nürnberg (DE)**

(56) Entgegenhaltungen:
**DE-C1- 19 514 257        US-A- 5 422 551**
**US-A1- 2003 171 866      US-B1- 6 274 947**
**US-B1- 6 298 295**

EP 1 678 803 B1

**Beschreibung**

Die Erfindung betrifft einen Fensterheber, eine Steuerungsvorrichtung eines Fensterhebers und ein Verfahren zur Steuerung eines Fensterhebers.

Aus der DE 197 45 597 A1 ist ein Verfahren zur Steuerung und Regelung der Verstellbewegung eines translatorisch verstellbaren Bauteils, insbesondere eines Fensterhebers in Kraftfahrzeugen bekannt. Bei diesem Verfahren zur Steuerung und Regelung der Verstellbewegung des translatorisch verstellbaren Bauteils, mit einer Stelleinrichtung, einer Antriebseinrichtung und einer Steuer- und Regelelektronik wird ein wirksamer Einklemmschutz unter Berücksichtigung einer auch in Schwergängigkeitsbereichen ausreichend großen Verstellkraft und der auf die Fahrzeugkarosserie einwirkenden, durch äußere Einflüsse bedingten Kräften gewährleistet. Dazu übt die Antriebseinrichtung eine Verstellkraft aus, die gleich der Summe der zum Verstellen des Bauteils notwendigen Kraft und einer Überschusskraft ist, wobei die Summe kleiner oder gleich einer zulässigen Einklemmkraft ist. Die Verstellkraft oder die Überschusskraft wird zusätzlich in Abhängigkeit von auf die Fahrzeugkarosserie oder Teilen davon einwirkenden Kräften geregelt.

Die Lösung gewährleistet einen über den gesamten Verstellbereich wirkenden Einklemmschutz, der auch sehr hohe Sicherheitsanforderungen erfüllt. Darüber hinaus wird sichergestellt, dass die Verstellkraft auch in den Schwergängigkeitsbereichen ausreichend groß ist und dass eine Stelleinrichtung ein translatorisch verstellbares Bauteil unter Berücksichtigung der auf die Fahrzeugkarosserie einwirkenden äußeren Einflüsse nach Maßgabe der Bedienungsperson materialschonend verstellt. Als äußere Einflüsse werden hier die auf die Fahrzeugkarosserie einwirkenden Kräfte oder Beschleunigungskräfte verstanden, die nicht unmittelbar durch die Stelleinrichtung oder durch eine Antriebseinrichtung verursacht werden, sondern beispielsweise wegen des schlechten Zustands der Fahrstrecke (Durchfahren eines Schlaglochs) oder beim Schließen einer Fahrzeugtür auftreten.

Die Regelung der Verstellkraft oder der Überschusskraft erfolgt vorzugsweise in Abhängigkeit von der Bewegungsrichtung des translatorisch verstellbaren Bauteils und von der überwiegenden Wirkungsrichtung auftretender Beschleunigungskräfte derart, dass die Verstellkraft stets kleiner oder gleich der zulässigen Einklemmkraft ist. Wirkt beispielsweise auf die Fahrzeugkarosserie eine Beschleunigungskraft, die die Schließbewegung eines translatorisch verstellbaren Bauteils unterstützt, so wird vorzugsweise der Schwellenwert herabgesetzt. Im Falle des Auftretens einer der Schließbewegung entgegen gerichteten Beschleunigungskraft wird der Schwellenwert heraufgesetzt. Auf diese Weise ist die Verstellkraft immer ausreichend groß, so dass die Schließbewegung sicher fortgesetzt und ein Einklemmschutz gewährleistet wird.

Weiterhin ist vorgesehen, dass beim Auftreten von innerhalb einer vorgegebenen Zeitspanne wechselnden auf die Fahrzeugkarosserie einwirkenden Beschleunigungskräften eine Regelung der Verstellkraft oder der Überschusskraft unterbrochen wird und ein Schwellenwert derart vorgegeben wird, dass die Verstellkraft stets kleiner oder gleich der zulässigen Einklemmkraft ist. Die Zeitspanne beträgt dabei beispielsweise 100 ms. Diese Ausführungsform berücksichtigt, dass bei ständig wechselnden, auf die Fahrzeugkarosserie einwirkenden Beschleunigungskräften der Schwellenwert nicht innerhalb einer kurzen Zeitspanne ständig geändert wird, was zu einer Beeinträchtigung der Bewegung des translatorisch verstellbaren Bauteils führen könnte. Durch die Vorgabe eines festen Schwellenwertes, der stets kleiner oder gleich der zulässigen Einklemmkraft ist, wird sowohl eine sichere Bewegung des translatorisch verstellbaren Bauteils als auch ein Einklemmschutz gewährleistet.

Die auf die Fahrzeugkarosserie einwirkenden Beschleunigungskräfte werden vorzugsweise durch einen Sensor erfasst, zum Beispiel durch einen digitale Signale liefernden Sensor. Digitale Signale lassen sich in einer Steuer- und Regelelektronik einfach weiterverarbeiten. Zur Einstellung der Regelung können dabei einzelne oder mehrere, zeitlich hintereinander liegende Signale des Sensors von der Steuer- und Regelelektronik ausgewertet werden. Die wiederholte Bewertung der Signale des Sensors ermöglicht es, ein gleichzeitiges Auftreten der durch äußere Einflüsse verursachten Beschleunigungskräfte und der durch einen Einklemmfall bedingten Kräfte sicher zu identifizieren.

Aus der DE 195 17 958 ist eine Motorantriebseinrichtung für ein Kraftfahrzeug bekannt. Bei der Motorantriebsvorrichtung für einen elektrischen Fensterheber wird die Drehung des Motors sofort angehalten, wenn sich der Bewegung des Fensters bei gedrehtem Motor ein Hindernis entgegenstellt. Die Motorantriebsvorrichtung dient zum Öffnen und zum Schließen des beweglichen Teils (Fensters) und kann selektiv betrieben und angehalten werden.

Aus DE 195 14 257 C1 sind eine weitere Vorrichtung sowie ein Verfahren zur Steuerung eines Fensterhebers eines Kraftfahrzeugs sind bekannt, bei der bzw. dem eine Verfahrbewegung gestoppt wird, wenn ein Periodenwert einen vorgegebenen Periodengrenzwert überschreitet. Die Ansprechschwelle ist während der zweiten und dritten Motorperiode als Konstante vorgegeben, wobei als Konstante jeweils ein in der vorausgegangenen Motorperiode bestimmter Periodenwert verwendet wird.

Eine elektrische Strommesseinrichtung misst die Stärke des durch den Motor in einer Startkompensationszeit fließenden Stroms, eine Stromstärkenänderungs-Detektoreinrichtung stellt aus dem ermittelten Strom bei jeder konstanten Zeitspanne ein Stromstärkeninkrement fest, und eine Motorsteuereinrichtung liefert ein erstes oder ein zweites Steuersignal an die Motorantriebseinrichtung, wobei mit dem ersten Signal abhängig von der Polarität des Stromstärkeninkrements der Motorbetrieb fortgesetzt und mit dem zweiten Signal der Motor sofort angehalten wird.

Zwei Wählschalter kennzeichnen die Drehrichtung des Motors, ein Paar Tastenschalter für die jeweiligen Motorrichtungen und zwei Selbsthalteschaltungen für die beiden Drehrichtungen des Motors ermöglichen ein Drehen des Motors bei Betätigung eines der Tastenschalter.

Aufgabe der vorliegenden Erfindung ist es, die Sicherheitseinrichtungen eines Fensterhebers eines Kraftfahrzeugs zu verbessern. Diese Aufgabe wird durch die Elektronische Steuerungsvorrichtung mit den Merkmalen des Anspruchs 1, den Fensterheber mit den Merkmalen des Anspruchs 37, sowie durch ein Steuerungsverfahren mit den Merkmalen des Anspruchs 18 gelöst. Vorteilhafte Weiterbildungen der Erfindung sind in den Unteransprüchen angegeben.

Demzufolge ist ein Verstelleinrichtung eines Kraftfahrzeugs vorgesehen, die durch eine Recheneinheit, die für das nachfolgend beschriebene Verfahren konfiguriert ist, gesteuert wird. In der Recheneinheit, die beispielsweise ein Mikrocontroller ist, wird zur Steuerung ein programmierbares (EEPROM) oder festverdrahtetes (ROM) Programm gestartet. Dabei wird eine Verstellbewegung des Fensterheberantriebs gestoppt oder ein Verfahren zum Stoppen der Verstellbewegung des Fensterheberantriebs gestartet, wenn ein zum Drehmoment des Fensterheberantriebeskorrelierendes Signal eine Ansprechschwelle überschreitet. Die Ansprechschwelle ist dabei kein konstanter Schwellwert, sondern im Verstellbereich einer Anfahrbewegung aus einem Stillstand des Fensterheberantriebs ist die Ansprechschwelle eine vorgegebene Funktion. Die Ansprechschwelle ist über die vorgegebene Funktion vorteilhafterweise verstellweg- abhängig oder verstellzeitabhängig. Diese Funktion lässt sich beispielsweise graphisch darstellen, indem die Verstellzeit oder der Verstellweg auf der Abszisse und die hiervon abhängige Ansprechschwelle auf der Ordinate aufgetragen wird. Der Verlauf dieser Funktion ist durch mindestens einen Parameter bestimmt, dessen Wert in Abhängigkeit von der Anfahrbewegung des Fensterheberantriebs geändert wird.

Das zum Drehmoment des Fensterheberantriebeskorrelierende Signal ist beispielsweise ein Antriebsstrom oder eine auf den Antrieb wirkende gemessene Kraft, vorzugsweise jedoch eine zeitliche Änderung der Verstellgeschwindigkeit des Fensterheberantriebs. Je nach verwendeter Messgröße als Signal, kann dieses positive oder negative Werte annehmen. Vorzugsweise werden zu diesem Signal korrelierende Werte, beispielsweise auch von diesem Signal zeitlich oder örtlich abgeleitete Werte, mit der Ansprechschwelle verglichen. In Abhängigkeit von diesem Vergleichsergebnis wird die Verstellbewegung des Fensterheberantriebs gestoppt.

Der Verstellbereich der Anfahrbewegung erstreckt sich von der Position des vorherigen Stillstands des Fensterheberantriebs bis in die Verstellung der Fensterscheibe mit im wesentlichen konstanter Verstellgeschwindigkeit hinein, wenn die Verstellbewegung nicht zuvor automatisch oder durch Eingreifen des Benutzer gestoppt worden ist, wobei in diesem Fall der Verstellbereich der Anfahrbewegung entsprechend verkürzt ist. Der Verstellbereich kann dabei beispielsweise zeitlich definiert sein, was bedeutet, dass der Verstellbereich der Anfahrbewegung seit dem Stillstand für eine bestimmte Verstellzeit definiert ist, alternativ kann der Verstellbereich aber auch über den Verstellweg definiert sein, was bedeutet, dass der Verstellbereich beispielsweise durch eine bestimmte Anzahl von Antriebsumdrehungen definiert ist.

Die durch den Funktionszusammenhang variierenden Werte der Ansprechschwelle sind durch den Verlauf dieser Funktion innerhalb des Verstellbereichs bestimmt. Die Funktion ist in einem einfachen Ausführungsbeispiel der Erfindung beispielsweise eine lineare Funktion:

$$y = mx + A$$

Dabei ist y der Werte der Ansprechschwelle und x ist der Verstellweg oder die Verstellzeit innerhalb des Verstellbereichs der Anfahrbewegung. Weiterhin weist die Linearfunktion die Parameter m und A auf.

Ein Wert zumindest einer der Parameter der erfindungsgemäßen Funktion wird in Abhängigkeit von der Anfahrbewegung des Fensterheberantriebs zumindest einmal geändert. So wird der Verlauf der Ansprechschwelle den Anfahrbedingungen im Verstellbereich der Anfahrbewegung angepasst.

Eine besonders leicht verständliche Ausführungsform der Erfindung sieht vor, dass der Wert des Parameter nur einmal geändert wird, indem der Wert als Startwert aus einer mathematischen Beziehung der Verstellgeschwindigkeit vor dem Stillstand des Fensterheberantriebs und der maximalen Verstellgeschwindigkeit im Verstellbereich der Anfahrbewegung bestimmt wird. Aus diesem Verhältnis der Verstellgeschwindigkeit vor dem Stillstand des Fensterheberantriebs und der maximalen Verstellgeschwindigkeit im Verstellbereich der Anfahrbewegung wird beispielsweise der Parameterwert A der obigen linearen Funktion mittels eines Proportionalitätsfaktors als die genannte mathematische Beziehung berechnet.

Eine besonders vorteilhafte Weiterbildung der Erfindung sieht jedoch vor, dass der Wert zumindest des einen Parameters innerhalb des Verstellbereichs der Anfahrbewegung mehrere Male bestimmt und geändert wird. Dabei können verschiedene Varianten wie folgt alternativ oder kombiniert genutzt werden.

Vorteilhafterweise wird in einer ersten Variante die Anfahrbewegung durch Messung einer Verstellgeschwindigkeit ermittelt. Die Änderung des Parameterwertes erfolgt in Abhängigkeit von einer oder mehreren gemessenen Verstellgeschwindigkeiten. Eine zweite bevorzugte Variante sieht vor, dass die Änderung des Parameterwertes in Abhängigkeit von einer zeitlichen Änderung einer Verstellgeschwindigkeit der Anfahrbewegung erfolgt. Wird die Stromaufnahme während des Verfahrensablaufes gemessen, wird in einer dritten Variante die Anfahrbewegung durch Messung eines vom Fensterheberantrieb aufgenommenen Stromes ermittelt. Die Änderung des Parameterwertes erfolge in Abhängigkeit von einem oder mehreren Stromwerten der Anfahrbewegung.

Bevorzugt erfolgt in einer Weiterbildung der Erfindung eine Berechnung zur Änderung des Parameterwertes fortlaufend. Die fortlaufende Berechnung bewirkt ein ständiges Nachlernen des Verlaufs der Ansprechschwelle, indem vorteilhafterweise der aktuelle Wert des Parameters in Abhängigkeit von dem vorhergehenden Wert des Parameters und dem aktuellen Wert des zum Drehmoment korrelierenden Signals, insbesondere der zeitlichen Änderung der Verstellgeschwindigkeit, bestimmt wird.

Eine vorteilhafte Weiterbildung der Erfindung weist zusätzlich zu der Funktion der Ansprechschwelle eine Lernfunktion auf. Die Lernfunktion erfüllt dabei den Zweck, durch einen Vergleich des aktuellen Wertes des zum Drehmoment korrelierenden Signals mit dem zugeordneten Funktionswert der Lernfunktion den neuen folgenden Wert des Parameter zu bestimmen. Die Lernfunktion kann dabei mit der Funktion der Ansprechschwelle vom Typ her identisch sein und sich lediglich durch unterschiedliche Parameter unterscheiden. Alternativ wird vorteilhafterweise eine vom Typ her unterschiedliche Lernfunktion gewählt, die eine gezielte Änderung des Parameters bewirkt. In dieser Weiterbildung erfolgt vorteilhafterweise die Änderung des Parameterwertes in Abhängigkeit von einer mathematischen Beziehung von dem zum Drehmoment korrelierenden Signal, insbesondere der zeitlichen Änderung der Verstellgeschwindigkeit, zu einem Lernfunktionswert der Lernfunktion.

Zusätzlich zu dieser Weiterbildung ist in einer Ausgestaltung dieser Weiterbildung der Erfindung vorgesehen, dass die Parameterwerte auf den Verlauf der Lernfunktion zurückwirken, indem vor der Berechnung des aktuellen Parameterwertes der Lernfunktionswert der Lernfunktion in Abhängigkeit von zumindest einem vorhergehenden Parameterwert berechnet wird.

Die zuvor genannten fortlaufenden Änderungen des Wertes des Parameters werden vorteilhafterweise mit der ebenfalls zuvor beschriebenen einmaligen Änderung des Parameterwertes zu Beginn der Verstellung im Verstellbereich der Anfahrbewegung kombiniert, indem zur Änderung ein Startwert des Parameters bestimmt wird. Zur Änderung des Parameterwertes durch einen Startwert sind unterschiedliche Varianten möglich, die auch miteinander kombiniert werden können.

In einer ersten, besonders einfachen Variante wird der Startwert als vorgegebener Wert aus einem Speicher ausgelesen. Dieser vorgegebene Wert kann als Standardwert in den Speicher fest einprogrammiert sein, oder anhand mehrerer Verstellvorgänge nachgelernt werden. Eine mit dieser ersten Variante vorteilhafterweise kombinierbare zweite Variante sieht vor, dass der Startwert in Abhängigkeit von der maximalen Verstellgeschwindigkeit im Verstellbereich der Anfahrbewegung bestimmt wird. Dies kann in einer bevorzugten dritten Variante dadurch geschehen, dass der Startwert aus einer mathematischen Beziehung der Verstellgeschwindigkeit vor dem Stillstand des Fensterheberantriebs und der maximalen Verstellgeschwindigkeit im Verstellbereich der Anfahrbewegung bestimmt wird.

Eine vorteilhafte Weiterbildung der Erfindung sieht eine Recheneinheit vor, die eingerichtet ist in die Funktion mindestens einen Eingangswert, vorzugsweise einen Zeitwert oder einen Wegwert oder eine Kombination der beiden einzugeben. Der Zeitwert ist beispielsweise die Verstellzeit seit dem Start der Verstellbewegung. Der Wegwert ist beispielsweise eine gemessene Verstellstrecke oder ein Antriebsweg des Antriebes der Verstelleinrichtung. Zudem ist die Recheneinheit eingerichtet, um aus der Funktion mindestens einen Ausgabewert, der insbesondere der Ansprechschwelle entspricht, auszugeben. Diese Ein- und Ausgabe erfolgt vorzugsweise fortlaufend, um eine fortlaufende Änderung des Schwellwertes zu berechnen. In einem einfachen Fall sind die Funktionswerte für jede Änderung insgesamt neu zu berechnen, so dass alle Funktionswerte eines Bewegungsweges oder einer Bewegungszeit in einem Speicher der Recheneinheit abgelegt werden. Hiervon abweichend ist es ausreichend die Berechnung des nächst folgenden Funktionswertes oder der nächsten folgenden Funktionswerte sowie dessen beziehungsweise deren Änderung vorzunehmen, um beispielsweise die benötigte Rechenleistung der Recheneinheit zu reduzieren.

In einer vorteilhaften Ausgestaltung der Erfindung ist die Funktion an ein Einschwingverhalten der Anfahrbewegung angepasst. Das Einschwingverhalten wird durch mehrere Beschleunigungs- und Bremsvorgänge der Antriebsbewegung während des Anfahrens der Verstelleinrichtung insbesondere aus der Gegenrichtung verursacht. Der Einschwingvorgang kann dabei mehrere Schwingungen des zum Drehmoment korrelierenden Signals aufweisen, die nicht als Blockierung der Verstellbewegung ausgewertet werden sollen. Diese müssen gegenüber einer beispielsweise durch einen Einklemmfall verursachten Blockierung von der Recheneinheit unterschieden werden. Zur Unterscheidung wird die Schwellwertfunktion der Form der Schwingungen derart angepasst, dass diese im Normalbetrieb, also wenn kein Einklemmfall vorliegt, den Verlauf des korrelierenden Signals nicht schneidet, jedoch zu diesem nur gering beabstandet ist.

Hierzu sieht eine vorteilhafte Weiterbildung der Erfindung vor, dass die Funktion eine dem Betrag nach zumindest abschnittsweise fallende Funktion ist. Vorzugsweise fällt diese stetig.

Prinzipiell ist eine Vielzahl von Funktionen für die Aufgabe vorteilhaft zu verwenden. Besonders vorteilhafte und einfach zu realisierende Funktionen sind eine lineare Funktion, eine logarithmische Funktion oder eine Exponentialfunktion.

Vorteilhafterweise wird ein Algorithmus zum Stoppen bei Überschreiten der Ansprechschwelle erst dann aktiviert, wenn eine Blockierung der Verstellbewegung aufgrund des Beginns der Bewegung des zu verstellenden Elementes der Verstelleinrichtung erfolgen kann. Hierzu wird anhand der Ermittlung des Maximums ($n_{max}$) der Verstellgeschwindigkeit (n) in der Anfahrbewegung der Stopp-Algorithmus aktiviert.

Die Erfindung umfasst ebenfalls einen Fensterheber eines Kraftfahrzeugs mit einem Fensterheberantrieb zum Verstellen der Position einer Fensterscheibe durch eine mechanische Kopplung zwischen dem Fensterheberantrieb und der Fensterscheibe durch einen Seilzug, der mit der Fensterscheibe und einer Seiltrommel verbunden ist, wobei die Seiltrommel mit dem Fensterheberantrieb mechanisch wirkverbunden ist, und einer Steuerungsvorrichtung, die vorzugsweise eine Recheneinheit für die zuvor beschriebenen Steuerungsmerkmale aufweist.

Weiterhin ist eine Steuerungsvorrichtung eines Fensterhebers eines Kraftfahrzeugs von der Erfindung umfasst, die Treibermitteln zur Bestromung eines Fensterheberantriebes, Sensormitteln zur Sensierung der Verstellbewegung des Fensterheberantriebs und eine Recheneinheit aufweist, die eingerichtet ist zur Durchführung eines Programmablaufs in dem eine Verstellbewegung des Fensterheberantriebs gestoppt oder ein Verfahren zum Stoppen der Verstellbewegung des Fensterheberantriebs gestartet wird, wenn ein zum Drehmoment des Fensterheberantriebes korrelierendes Signal eine Ansprechschwelle überschreitet, wobei im Verstellbereich einer Anfahrbewegung aus einem Stillstand des Fensterheberantriebs die Ansprechschwelle eine insbesondere verstellwegabhängige oderverstellzeitabhängige vorgegebene Funktion ist mit mindestens einem einen Verlauf dieser Funktion bestimmenden Parameter, dessen Wert in Abhängigkeit von der Anfahrbewegung des Fensterheberantriebs geändert wird.

Im Folgenden wird die Erfindung anhand von Ausführungsbeispielen bezugnehmend auf schematische zeichnerische Darstellungen näher erläutert.

Dabei zeigen

Fig 1 eine schematische Darstellung von Kurvenverläufen während einer An- fahrbewegung,

Fig 2 eine schematische Darstellung von Kurvenverläufen mit einer nach- gelernten Schwellwertfunktion und einem Einklemmfall während einer Anfahrbewegung, und

Fig 3 eine schematische Darstellung von Kurvenverläufen, bei der eine Be- rechnung zur Änderung des Parameterwertes in Abhängigkeit von der Detektion eines Minimums des zum Drehmoment korrelierenden Signals erfolgt.

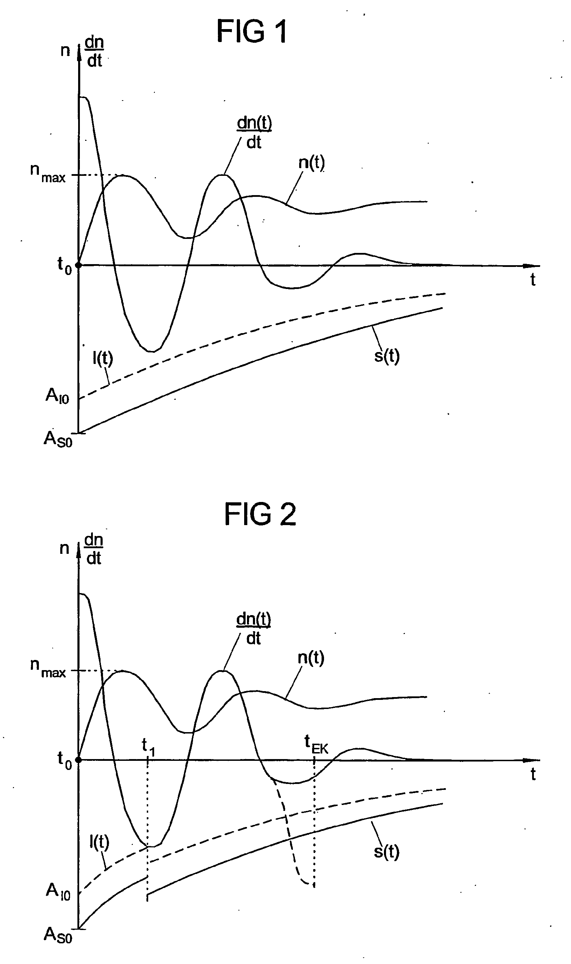

Die in den Figuren 1 und 2 dargestellten Verläufe und Funktionen beziehen sich auf ein konkretes Ausführungsbeispiel der Erfindung. Ziel dieses konkreten Ausführungsbeispiels ist es die Kraft, die auf ein eingeklemmtes Körperteil während der Anfahrbewegung eines Fensterhebers wirkt, zu reduzieren. Um eine Verletzung des eingeklemmten Körperteils zu vermeiden, wird die Verstellbewegung unmittelbar nach dem Erkennen eines Einklemmfalles gestoppt. Nach dem Stoppen wird die Verstellbewegung umgekehrt, um das eingeklemmte Körperteil wieder freizugeben.

Für das Erkennen des Einklemmfalles wertet eine Recheneinheit ein Signal n aus, das mit dem Drehmoment des Antriebs korreliert. Dieses Signal ist in diesem Ausführungsbeispiel die Drehzahl n des Antriebes und die daraus abgeleitete zeitliche Änderung der Drehzahl dn/dt. Die Drehzahl n ist über eine Kennlinie des Elektromotors des Fensterhebers mit der Verstellkraft korreliert. Die zeitliche Änderung der Drehzahl dn/dt ist demzufolge zu der zeitlichen Änderung der Verstellkraft korreliert. Ein Einklemmen eines Körperteils zwischen der Scheibenoberkante und dem Türrahmen bewirkt eine sofortige Abbremsung der Verstellgeschwindigkeit und ebenfalls eine über Mechanik des Fensterhebers gekoppelte Abbremsung der Antriebsgeschwindigkeit. Die signifikante Abbremsung im Einklemmfall resultiert in einem signifikanten negativen Wert der Änderung der Drehzahl dn/dt. Überschreitet dieser negative Wert eine Ansprechschwelle s(t) wird eine Verstellbewegung des Fensterheberantriebs gestoppt. Diese Stoppentscheidung kann unter weiteren Bedingungen, beispielsweise mehrere aufeinander folgende negative Werte unterhalb der Ansprechschwelle s(t), erfolgen. Mehrere dieser Bedingungen können auch zeitlich aufeinander folgend ausgewertet werden, so dass in diesem Ausführungsbeispiel vorteilhafterweise ein Programm zum Stoppen der Verstellbewegung des Fensterheberantriebs gestartet wird, wenn der erste negative Wert die Ansprechschwelle s(t) unterschreitet.

Im Gegensatz zu einem konstanten Schwellwert ist die Ansprechschwelle s(t) eine Funktion, die in diesem Ausführungsbeispiel der Figur 1 betragsmäßig fällt und als e-Funktion ausgebildet ist. Der Anfangswert $A_{S0}$ zum Zeitpunkt $t_0$ wird aus dem Verhältnis der Verstellgeschwindigkeit vor einem vorherigen Stoppen und der maximalen Anfahrleerlaufdrehzahl $n_{max}$ ermittelt. Bereits diese Änderung des Verlaufs der Ansprechschwelle s(t) durch die Veränderung des Anfangswertes $A_{S0}$ ermöglicht die Detektions-Charakteristik des Einklemmfalls für unterschiedliches Anlaufverhalten anzupassen.

Eine weitere Verbesserung der Empfindlichkeit der Einklemmdetektion lässt sich durch die Verwendung einer Lernkurve I(t) (in den Figuren 1 und 2 gestrichelt dargestellt) erzielen. Diese Lernkurve I(t) ist innerhalb der Betragshüllkurve der Ansprechschwelle s(t) angeordnet, wie in Figur 1 dargestellt. Auch diese weist zum Zeitpunkt $t_0$ einen Anfangslernwert $A_{I0}$ auf, der zu dem Anfangswert $A_{S0}$ der Ansprechschwelle s(t) korreliert.

In Figur 2 ist ein Nachlernen zum Zeitpunkt $t_1$ dargestellt. Im Zeitpunkt $t_1$ schneidet die Lernkurve I(t) die Kurve der zeitlichen Änderung der Drehzahl dn/dt. Dieser Schnittpunkt wird rechentechnisch bestimmt und nachfolgend sowohl die Lernkurve I(t) als auch die Ansprechschwelle s(t) neu bestimmt, indem die Anfangswerte $A_{I0}$ und $A_{S0}$ derart neu berechnet werden, dass die Lernkurve I(t) gerade nicht mehr die Kurve der zeitlichen Änderung der Drehzahl dn/dt schneiden würde, wie in Figur 2 dargestellt. Hierzu wird in der Recheneinheit der Steuerungsvorrichtung des Fensterhebers zur Änderung der Ansprechschwelle Parameterwerte, insbesondere der Anfangswert $A_{SO}$ in dem Speicher der Recheneinheit überschrieben oder der neue Wert wird in einer fortlaufenden Liste ergänzt um so Rückschlüsse auf den Einlernvorgang ziehen zu können.

Zudem ist in Figur 2 zum Zeitpunkt $t_{EK}$ die Bestimmung eines Einklemmfalles dargestellt. Im Einklemmfall weicht der Verlauf der zeitlichen Änderung der Drehzahl dn/dt von dem normalen Anfahrverhalten ab. Die Abweichung ist in Figur 2 gestrichelt dargestellt. Demzufolge führt die starke Abbremsung durch den Einklemmvorgang zu signifikanten negativen Werten der Änderung der Antriebsdrehzahl $dn(t)_{EK}/dt$. Diese überschreitet mehrmals betragsmäßig die Ansprechschwelle s(t). Mehrere überschreitende Werte werden ermittelt und nachfolgend der Elektromotor gestoppt und die Antriebsrichtung umgekehrt.

Eine vorteilhafte Ausführungsvariante der Erfindung sieht vor, dass eine Berechnung zur Änderung des Parameterwertes in Abhängigkeit von der Detektion eines Minimums des zum Drehmoment korrelierenden Signal (dn/dt, n), insbesondere der zeitlichen Änderung (dn/dt) der Verstellgeschwindigkeit (n) erfolgt. Vorzugsweise erfolgt dabei eine Berechnung zur Änderung des Parameterwertes in Abhängigkeit von dem Wert des korrelierenden Signals zum Abtastzeitpunkt ($t_{min}$) des Minimums.

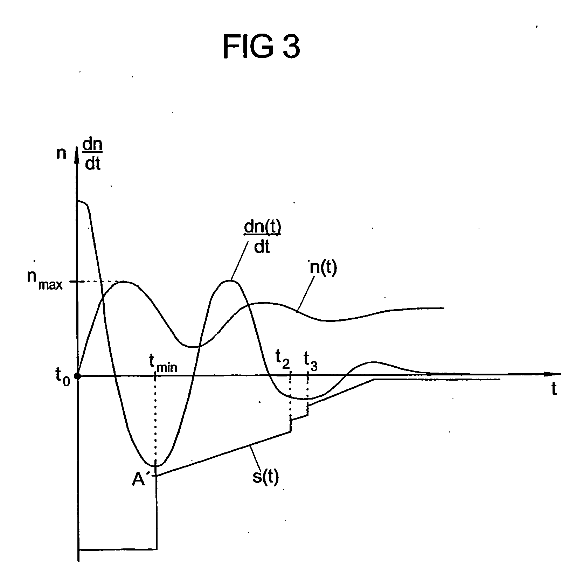

Eine konkrete Ausgestaltung dieser Variante ist schematisch in Figur 3 dargestellt. Die Funktion ist in dieser Ausgestaltung eine lineare Funktion der zuvor beschriebenen Form

$$S(t) = m \cdot t + A'$$

Der Anfangswert A' wird zu dem Abtastzeitpunkt $t_{min}$ bestimmt. Dieser Abtastzeitpunkt wird ermittelt, indem das Minimum der ersten Ableitung dn(t)/dt der Drehzahl n nach Zeit t detektiert wird. Dies kann beispielsweise anhand der zweiten Ableitung der Drehzahl n nach der Zeit t und einer Nulldurchgangdetektion erfolgen. Zum Abtastzeitpunkt $t_{min}$ wird der Wert der Funktion S(t) auf einen Wert gesetzt, der um einen Schwellwertoffset von dem Abtastwert dn/dt zum Abtastzeitpunkt $t_{min}$ verschoben ist. Zu den Abtastzeitpunkten $t_2$ und $t_3$ erfolgt ein Nachlernen der Ansprechschwelle S(t) des Einklemmschutzes. In diesem Ausführungsbeispiel erfolgt dabei ein Nachlernen in Form einer Treppenfunktion, die eine Differenz zwischen der Ansprechschwelle S(t) und der ersten Ableitung dn(t)/dt der Drehzahl n nach Zeit t ausschließlich verringert. Zudem erfolgt ein Nachlernen ausschließlich, wenn die erste Ableitung dn(t)/dt der Drehzahl n nach Zeit t negative Werte annimmt.

## Bezugszeichenliste

| | |
|---|---|
| n | Drehzahl des Elektromotors |
| dn/dt | zeitliche Änderung der Drehzahl |
| s(t) | Ansprechschwelle |
| $A_{S0}$ | Anfangswert der Ansprechschwelle zum Zeitpunkt $t_0$ |
| $t_0$ | Startzeitpunkt |
| $n_{max}$ | Anfahrleerlaufdrehzahl |
| I(t) | Lernkurve |
| $A_{I0}$ | Anfangslernwert |
| $t_1, t_2, t_3$ | Lernzeitpunkt |
| $dn(t)_{EK}/dt$ | Verlauf der zeitlichen Änderung der Drehzahl während eines Einklemmfalles |
| $t_{EK}$ | Einklemmfallzeitpunkt |
| $t_{min}$ | Zeitpunkt eines Minimums der zeitlichen Änderung der Drehzahl |
| t | Zeit |

## Patentansprüche

1. Elektronische Steuerungsvorrichtung mit einer Recheneinheit, eingerichtet zur Steuerung einer Verstelleinrichtung, insbesondere eines Fensterhebers eines Kraftfahrzeugs, die eine Verstellbewegung des Antriebs stoppt oder ein Programm zum Stoppen der Verstellbewegung des Antriebs startet, wenn ein zum Drehmoment des Antriebes korrelierendes Signal (dn/dt, n) eine Ansprechschwelle (s(t)) überschreitet, indem im Verstellbereich einer Anfahrbewegung aus einem Stillstand des Antriebs die Ansprechschwelle (s(t)) eine verstellwegabhängige oder verstellzeitabhängige vorgegebene Funktion ist mit mindestens einem einen Verlauf dieser Funktion bestimmenden Parameter (Aso, A, m), **dadurch gekennzeichnet, dass**

die Recheneinheit dazu eingerichtet ist, den Wert dieses Parameters (Aso, A, m) in Abhängigkeit von einer zeitlichen Änderung (dn/dt) einer Verstellgeschwindigkeit (n) der Anfahrbewegung des Antriebs zu ändern.

2.  Elektronische Steuerungsvorrichtung nach Anspruch 1,
    **dadurch gekennzeichnet, dass**
    die Recheneinheit eingerichtet ist zur Ermittlung der Anfahrbewegung durch Messung einer Verstellgeschwindigkeit (n), und
    die Änderung des Parameterwertes in Abhängigkeit von einer oder mehreren gemessenen Verstellgeschwindigkeiten (n) erfolgt.

3.  Elektronische Steuerungsvorrichtung nach einem der vorhergehenden Ansprüche, **dadurch gekennzeichnet, dass**
    die Recheneinheit eingerichtet ist zur Ermittlung der Anfahrbewegung durch Messung eines vom Antrieb aufgenommenen Stromes, und
    die Änderung des Parameterwertes in Abhängigkeit von einem oder mehreren Stromwerten der Anfahrbewegung erfolgt.

4.  Elektronische Steuerungsvorrichtung nach einem der vorhergehenden Ansprüche, **dadurch gekennzeichnet, dass**
    die Recheneinheit eingerichtet ist zur fortlaufenden Berechnung der Änderung des Parameterwertes, indem der aktuelle Wert des Parameters (Aso, A, m) in Abhängigkeit von dem vorhergehenden Wert des Parameters (Aso, A, m) und dem aktuellen Wert des drehmomentkorrelierenden Signals (dn/dt, n), insbesondere der zeitlichen Änderung (dn/dt) der Verstellgeschwindigkeit (n), bestimmt wird.

5.  Elektronische Steuerungsvorrichtung nach einem der vorhergehenden Ansprüche, **dadurch gekennzeichnet, dass**
    die Recheneinheit eingerichtet ist zur Änderung des Parameterwertes in Abhängigkeit von einer mathematischen Beziehung des drehmomentkorrelierenden Signals (dn/dt, n), insbesondere der zeitlichen Änderung (dn/dt) der Verstellgeschwindigkeit (n), zu einem Lernfunktionswert einer Lernfunktion (I(t)).

6.  Elektronische Steuerungsvorrichtung nach Anspruch 5,
    **dadurch gekennzeichnet, dass**
    die Recheneinheit zur zuvorigen Berechnung des Lemfunktionswertes der Lernfunktion (I(t)) in Abhängigkeit von zumindest einem vorhergehenden Parameterwert eingerichtet ist.

7.  Elektronische Steuerungsvorrichtung nach einem der vorhergehenden Ansprüche, **dadurch gekennzeichnet, dass**
    die Recheneinheit eingerichtet ist zur Bestimmung eines Startwertes des Parameters (Aso, A) als Änderung desselben.

8.  Elektronische Steuerungsvorrichtung nach Anspruch 7,
    **dadurch gekennzeichnet, dass**
    die Recheneinheit eingerichtet ist zur Bestimmung des Startwertes in Abhängigkeit von der maximalen Verstellgeschwindigkeit (nmax) im Verstellbereich der Anfahrbewegung.

9.  Elektronische Steuerungsvorrichtung nach Anspruch 7,
    **dadurch gekennzeichnet, dass**
    die Recheneinheit eingerichtet ist zur Bestimmung des Startwertes aus einer mathematischen Beziehung der Verstellgeschwindigkeit vor dem Stillstand des Antriebs und der maximalen Verstellgeschwindigkeit (nmax) im Verstellbereich der Anfahrbewegung.

10. Elektronische Steuerungsvorrichtung nach Anspruch 7,
    **dadurch gekennzeichnet, dass**
    der Startwert als vorgegebener Wert aus einem Speicher auslesbar ist.

11. Elektronische Steuerungsvorrichtung nach einem der vorhergehenden Ansprüche, **dadurch gekennzeichnet, dass**
    die Recheneinheit eingerichtet ist um in die Funktion mindestens einen Eingangswert, insbesondere einen Zeitwert und/oder einen Wegwert einzugeben, und
    aus der Funktion mindestens einen Ausgabewert, der insbesondere der Ansprechschwelle (s(t)) entspricht, auszugeben.

12. Elektronische Steuerungsvorrichtung nach einem der vorhergehenden Ansprüche, **dadurch gekennzeichnet, dass**
    die Funktion an ein Einschwingverhalten der Anfahrbewegung angepasst ist.

13. Elektronische Steuerungsvorrichtung nach Anspruch 12,
    **dadurch gekennzeichnet, dass**
    die Funktion eine dem Betrag nach zumindest abschnittsweise fallende Funktion, die insbesondere stetig fällt, ist.

14. Elektronische Steuerungsvorrichtung nach einem der vorhergehenden Ansprüche, **dadurch gekennzeichnet, dass**
    die Funktion eine lineare Funktion ist.

15. Elektronische Steuerungsvorrichtung nach einem der Ansprüche 8 bis 13, **dadurch gekennzeichnet, dass**
    die Funktion eine logarithmische Funktion ist.

**16.** Elektronische Steuerungsvorrichtung nach einem der Ansprüche 8 bis 13,
**dadurch gekennzeichnet, dass**
die Funktion eine Exponentialfunktion ist.

**17.** Elektronische Steuerungsvorrichtung nach einem der vorhergehenden Ansprüche,
**dadurch gekennzeichnet, dass**
die Recheneinheit eingerichtet ist zur Aktivierung eines Algorithmus zum Stoppen bei Überschreiten der Ansprechschwelle (s(t)) anhand der Ermittlung des Maximums("max) der Verstellgeschwindigkeit (n) in der Anfahrbewegung.

**18.** Verfahren zur Steuerung einer Verstelleinrichtung, insbesondere eines Fensterhebers eines Kraftfahrzeugs, bei dem eine Verstellbewegung des Antriebs gestoppt oder ein Verfahren zum Stoppen der Verstellbewegung des Antriebs gestartet wird, wenn ein zum Drehmoment des Antriebes korrelierendes Signal (dn/dt, n) eine Ansprechschwelle (s(t)) überschreitet, wobei im Verstellbereich einer Anfahrbewegung aus einem Stillstand des Antriebs die Ansprechschwelle (s(t)) eine verstellwegabhängige oder verstellzeitabhängige vorgegebene Funktion ist mit mindestens einem einen Verlauf dieser Funktion bestimmenden Parameter (Aso, A,A', m),
**dadurch gekennzeichnet, dass**
der Wert dieses Parameters (Aso, A, A', m) in Abhängigkeit von einer zeitlichen Änderung (dn/dt) einer Verstellgeschwindigkeit (n) der Anfahrbewegung des Antriebs geändert wird.

**19.** Verfahren nach Anspruch 18,
**dadurch gekennzeichnet, dass**
die Anfahrbewegung durch Messung einer Verstellgeschwindigkeit (n) ermittelt wird, und
die Änderung des Parameterwertes in Abhängigkeit von einer oder mehreren gemessenen Verstellgeschwindigkeiten (n) erfolgt.

**20.** Verfahren nach Anspruch 18 oder 19,
**dadurch gekennzeichnet, dass**
die Anfahrbewegung durch Messung eines vom Antrieb aufgenommenen Stromes ermittelt wird, und
die Änderung des Parameterwertes in Abhängigkeit von einem oder mehreren Stromwerten der Anfahrbewegung erfolgt.

**21.** Verfahren nach einem der Ansprüche 18 bis 20,
**dadurch gekennzeichnet, dass**
eine Berechnung zur Änderung des Parameterwertes fortlaufend erfolgt, indem der aktuelle Wert des Parameters(Aso, A, m) in Abhängigkeit von dem vorhergehenden Wert des Parameters(Aso, A, m) und dem aktuellen Wert des zum Drehmomentkorrelierenden Signals (dn/dt, n), insbesondere der zeitlichen Änderung (dn/dt) der Verstellgeschwindigkeit (n), bestimmt wird.

**22.** Verfahren nach einem der Ansprüche 18 bis 21,
**dadurch gekennzeichnet, dass**
eine Berechnung zur Änderung des Parameterwertes in Abhängigkeit von der Detektion eines Minimums des zum Drehmoment korrelierenden Signal (dn/dt, n), insbesondere der zeitlichen Änderung (dn/dt) der Verstellgeschwindigkeit (n) erfolgt.

**23.** Verfahren nach Anspruch 22,
**dadurch gekennzeichnet, dass**
eine Berechnung zur Änderung des Parameterwertes in Abhängigkeit von dem Wert des korrelierenden Signals zum Abtastzeitpunkt(t.",) des Minimums des zum Drehmomentkorrelierenden Signals (dn/dt) erfolgt.

**24.** Verfahren nach einem der Ansprüche 18 bis 23,
**dadurch gekennzeichnet, dass**
die Änderung des Parameterwertes in Abhängigkeit von einer mathematischen Beziehung von dem zum Drehmoment korrelierenden Signal (dn/dt, n), insbesondere der zeitlichen Änderung (dn/dt) der Verstellgeschwindigkeit (n), zu einem Lernfunktionswert einer Lernfunktion (I(t)) erfolgt.

**25.** Verfahren nach Anspruch 24,
**dadurch gekennzeichnet, dass**
zuvor der Lernfunktionswert der Lernfunktion (I(t)) in Abhängigkeit von zumindest einem vorhergehenden Parameterwert berechnet wird.

**26.** Verfahren nach einem der Ansprüche 18 bis 25,
**dadurch gekennzeichnet, dass**
zur Änderung ein Startwert des Parameters (Aso, A) bestimmt wird.

**27.** Verfahren nach Anspruch 26,
**dadurch gekennzeichnet, dass**
der Startwert in Abhängigkeit von der maximalen Verstellgeschwindigkeit (nmax) im Verstellbereich der Anfahrbewegung bestimmt wird.

**28.** Verfahren nach Anspruch 26,
**dadurch gekennzeichnet, dass**
der Startwert aus einer mathematischen Beziehung der Verstellgeschwindigkeit vor dem Stillstand des Antriebs und der maximalen Verstellgeschwindigkeit(nmax) im Verstellbereich der Anfahrbewegung bestimmt wird.

**29.** Verfahren nach Anspruch 26,
**dadurch gekennzeichnet, dass**
der Startwert als vorgegebener Wert aus einem Speicher ausgelesen wird.

**30.** Verfahren nach einem der Ansprüche 18 bis 29,

**dadurch gekennzeichnet, dass**
in die Funktion mindestens ein Eingangswert, insbesondere ein Zeitwert und/oder ein Wegwert eingegeben wird, und
aus der Funktion mindestens ein Ausgabewert, der insbesondere der Ansprechschwelle (s(t)) entspricht, ausgegeben wird.

31. Verfahren nach einem der Ansprüche 18 bis 30,
**dadurch gekennzeichnet, dass**
die Funktion an ein Einschwingverhalten der Anfahrbewegung angepasst ist.

32. Verfahren nach Anspruch 31,
**dadurch gekennzeichnet, dass**
die Funktion eine dem Betrag nach zumindest abschnittsweise fallende Funktion, die insbesondere stetig fällt, ist.

33. Verfahren nach einem der Ansprüche 18 bis 32,
**dadurch gekennzeichnet, dass**
die Funktion eine lineare Funktion ist.

34. Verfahren nach einem der Ansprüche 18 bis 32,
**dadurch gekennzeichnet, dass**
die Funktion eine logarithmische Funktion ist.

35. Verfahren nach einem der Ansprüche 18 bis 34,
**dadurch gekennzeichnet, dass**
die Funktion eine Exponentialfunktion ist.

36. Verfahren nach einem der Ansprüche 18 bis 35,
**dadurch gekennzeichnet, dass**
ein Algorithmus zum Stoppen bei Überschreiten der Ansprechschwelle anhand der Ermittlung des Maximums(nmax) der Verstellgeschwindigkeit (n) in der Anfahrbewegung aktiviert wird.

37. Elektronische Steuervorrichtung nach Anspruch 1 eines Fensterheberantriebs eines Kraftfahrzeugs,
**gekennzeichnet durch**

- Treibermittel zur Bestromung eines Fensterheberantriebs und
- Sensormittel zur Sensierung der Verstellbewegung des Fensterheberantriebs.

38. Fensterheber eines Kraftfahrzeugs mit

- einem Fensterheberantrieb zum Verstellen der Position einer Fensterscheibe durch eine mechanische Kopplung zwischen dem Fensterheberantrieb und der Fensterscheibe durch einen Seilzug, der mit der Fensterscheibe und einer Seiltrommel verbunden ist, wobei die Seiltrommel mit dem Fensterheberantrieb mechanisch wirkverbunden ist, und
- einer Steuerungsvorrichtung nach Anspruch 37.

**Claims**

1. Electronic control device having a processing unit configured to control an adjusting device, particularly a power window lift of a motor vehicle, said processing unit stopping an adjusting movement of the drive or starting a program for stopping the adjusting movement of the drive, when a signal (dn/dt, n) correlating to the torque of the drive exceeds a response threshold (s(t)), the response threshold (s(t)) being a function depending on an adjusting path or adjusting time in the adjusting range of the start-up movement from a standstill of the drive, with at least one parameter (Aso, A, m) determining the course of this function
**characterized in**
the processing unit being adapted to adjust the value of this parameter (Aso, A, m) depending on a temporal change (dn/dt) of an adjusting speed (n) of the start-up movement of the drive.

2. Electronic control device according to claim 1,
**characterized in**
the processing unit being configured to determine the start-up movement by measuring an adjusting speed (n), and
the adjustment of the parameter value being effected depending on one or a plurality of measured adjusting speeds (n).

3. Electronic control device according to one of the previous claims,
**characterized in**
the processing unit being configured to determine the start-up movement by measuring a current drawn by the drive, and
the adjustment of the parameter value being effected depending on one or a plurality of current values of the start-up movement.

4. Electronic control device according to one of the previous claims,
**characterized in**
the processing unit being configured to continuously calculate the adjustment of the parameter value by determining the latest parameter value (Aso, A, m) depending on the previous parameter value (Aso, A, m) and the latest value of the signal correlating to the torque (dn/dt, n), in particular the temporal change (dn/dt) of the adjusting speed (n).

5. Electronic control device according to one of the previous claims,
**characterized in**
the processing unit being configured to adjust the parameter value depending on a mathematical relationship of the signal correlating to torque (dn/dt, n), particularly the temporal change (dc/dt) of the adjusting speed (n), to a learning function value of a learning function (I(t)).

6. Electronic control device according to claim 5,
**characterized in**
the processing unit being configured to calculate in advance the learning function value of the learning function (I(t)) depending on at least one previous parameter value.

7. Electronic control device according to one of the previous claims,
**characterized in**
the processing unit being configured for determining an initial value of the parameter (Aso, A) as an adjustment of the same.

8. Electronic control device according to claim 7,
**characterized in**
the processing unit being configured for determining the initial value depending on the maximum adjusting speed (nmax) in the adjusting range of the start-up movement.

9. Electronic control device according to claim 7,
**characterized in**
the processing unit being configured to determine the initial value from a mathematical relationship of the adjusting speed prior to the standstill of the drive and the maximum adjusting speed (nmax) in the adjusting range of the start-up movement.

10. Electronic control device according to claim 7,
**characterized in**
the initial value being readable as a predefined value from a memory unit.

11. Electronic control device according to one of the previous claims,
**characterized in**
the processing unit being configured to input into the function at least one input value, particularly a time value and / or a path value and
to output at least one output value from the function, which in particular corresponds to the response threshold (s(t)).

12. Electronic control device according to one of the previous claims,
**characterized in**
the function being adapted to a transient response of the start-up movement.

13. Electronic control device according to claim 12,
**characterized in**

the function being a function the amount of which decreases, in particular continuously, at least in a section.

14. Electronic control device according to one of the previous claims,
**characterized in**
the function being a linear function.

15. Electronic control device according to one of the claims 8 to 13,
**characterized in**
the function being a logarithmical function.

16. Electronic control device according to one of the claims 8 to 13,
**characterized in**
the function being an exponential function.

17. Electronic control device according to one of the previous claims,
**characterized in**
the processing unit being configured to activate an algorithm to stop when it exceeds the response threshold (s(t)), on the basis of the calculation of the maximum ("max) adjusting speed (n) during the start-up movement.

18. Method for controlling an adjusting device, in particular a power window lift of a motor vehicle, wherein an adjusting movement of the drive is stopped or a method for stopping the adjusting movement of the drive is initiated, when a signal correlating to the torque of the drive (dn/dt, n) exceeds a response threshold (s(t)), whereat, in the adjustment range of a start-up movement from a standstill of the drive, the response threshold is a predetermined function depending on the adjusting path or adjusting time, having at least one parameter (Aso, A, A', m) determining the course of this function,
**characterized in**
this parameter value (Aso, A, A', m) being adjusted depending on a temporal change (dn/dt) of an adjusting speed (n) of the start-up movement of the drive.

19. Method according to claim 18,
**characterized in**
the start-up movement being determined by measuring an adjusting speed (n), and
the adjustment of the parameter value being effected depending on one or a plurality of measured adjusting speeds (n).

20. Method according to claim 18 or 19,
**characterized in**
the start-up movement being determined by measuring a current which is drawn by the drive, and

the adjustment of the parameter value being effected depending on one or a plurality of current values of the start-up movement.

21. Method according to claim 18 to 20,
**characterized in**
a calculation for adjusting the parameter value, is continuously effected by way of determining the latest parameter value (Aso, A, m) depending on the previous parameter value (Aso, A, m) and the latest value of the signal correlating to the torque (dn/dt, n), in particular the temporal change (dn/dt) of the adjusting speed (n).

22. Method according to one of the claims 18 to 21,
**characterized in**
a calculation for adjusting the parameter value depending on the detection of a minimum of the signal correlating to the torque (dn/dt, n), particularly the temporal change (dn/dt) of the adjusting speed (n), being effected.

23. Method according to claim 22,
**characterized in**
a calculation for adjusting the parameter value depending on the value of the correlating signal at the time (t.") of the minimum of the signal correlating to the torque (dn/dt) being effected.

24. Method according to claims 18 to 23,
**characterized in**
the adjustment of the parameter value being effected depending on a mathematical relationship of the signal correlating to the torque (dn/dt, n), particularly the temporal change (dn/dt) of the adjusting speed (n), to a learning function value of a learning function (l(t)).

25. Method according to claim 24,
**characterized in**
the learning function value of the learning function (l(t)) being calculated depending on at least one previous parameter value.

26. Method according to one of the claims 18 to 25,
**characterized in**
an initial value of the parameter (Aso, A) being determined for adjustment.

27. Method according to claim 26,
**characterized in**
the initial value being determined depending on the maximum adjusting speed (nmax) in the adjusting range of the start-up movement.

28. Method according to claim 26,
**characterized in**
the initial value being determined from a mathematical relationship of the adjusting speed prior to shutdown of the drive and the maximum adjusting speed (nmax) in the adjusting range of the start-up movement.

29. Method according to claim 28,
**characterized in**
the initial value being read from a memory unit.

30. Method according to one of the claims 18 to 29,
**characterized in**
at least one input value, particularly a time and / or a path value, being entered into the function, and at least one output value, which in particular is equivalent to the response threshold (s(t)), being output by the function.

31. Method according to one of the claims 18 to 30,
**characterized in**
the function being adjusted to a transient response of the start-up movement.

32. Method according to claim 31,
**characterized in**
the function being a function the amount of which decreases, in particular continuously, at least in a section.

33. Method according to one of the claims 18 to 32,
**characterized in**
the function being a linear function.

34. Method according to one of the claims 18 to 32,
**characterized in**
the function being a logarithmical function.

35. Method according to one of the claims 18 to 34,
**characterized in**
the function being an exponential function.

36. Method according to one of the claims 18 to 35,
**characterized in**
an algorithm for stopping in case the response threshold is exceeded being activated by means of determining the maximum (nmax) of the adjusting speed (n) in the start-up movement.

37. Electronic control device for a power window lift of a motor vehicle according to claim 1
**characterized in**

    - a drive means for supplying power to a power window lift and
    - a sensor means for sensing the adjusting movement of the power window lift drive.

38. Power window lift of a motor vehicle having

- a power window lift for adjusting the position of a window by way of mechanically coupling between the power window lift drive and the window with a cable pull, said cable pull being connected with the window and a rope drum, whereat the rope drum is connected mechanically operatively with the power window drive, and
- a control device according to claim 37.

**Revendications**

1. Dispositif de commande électronique comprenant une unité de calcul, conçu pour commander un dispositif d'actionnement de déplacement, notamment d'un système lève-vitre d'un véhicule automobile, qui stoppe un mouvement d'actionnement de déplacement de l'entraînement ou démarre un programme pour stopper le mouvement d'actionnement de déplacement de l'entraînement, lorsqu'un signal (dn/dt, n) en corrélation avec le couple de l'entraînement, passe au-dessus d'un seuil de réponse (s(t)), par le fait que dans la plage de déplacement d'un mouvement de démarrage à partir d'un état immobile de l'entraînement, le seuil de réponse (s(t)) est une fonction prédéterminée dépendant du chemin de déplacement ou du temps de déplacement, avec au moins un paramètre ($A_{SO}$, A, m) déterminant une loi de variation de cette fonction, **caractérisé en ce que** l'unité de calcul est conçue pour faire varier la valeur de ce paramètre ($A_{SO}$, A, m) en fonction d'une variation par rapport au temps (dn/dt) d'une vitesse de déplacement (n) du mouvement de démarrage de l'entraînement.

2. Dispositif de commande électronique selon la revendication 1, **caractérisé en ce que** l'unité de calcul est conçue pour la détermination du mouvement de démarrage par mesure d'une vitesse de déplacement (n), et la variation de la valeur de paramètre s'effectue en fonction d'une ou de plusieurs vitesses de déplacement (n) mesurées.

3. Dispositif de commande électronique selon l'une des revendications précédentes, **caractérisé en ce que** l'unité de calcul est conçue pour la détermination du mouvement de démarrage par mesure d'un courant absorbé par l'entraînement, et la variation de la valeur de paramètre s'effectue en fonction d'une ou de plusieurs valeurs de courant du mouvement de démarrage.

4. Dispositif de commande électronique selon l'une des revendications précédentes,

**caractérisé en ce que** l'unité de calcul est conçue pour le calcul continuel de la variation de la valeur de paramètre, par la détermination de la valeur actuelle du paramètre ($A_{SO}$, A, m) en fonction de la valeur précédente du paramètre ($A_{SO}$, A, m) et de la valeur actuelle du signal (dn/dt, n) en corrélation avec le couple, notamment la variation par rapport au temps (dn/dt) de la vitesse de déplacement (n).

5. Dispositif de commande électronique selon l'une des revendications précédentes, **caractérisé en ce que** l'unité de calcul est conçue pour faire varier la valeur de paramètre en fonction d'une relation mathématique du signal (dn/dt, n) en corrélation avec le couple, notamment la variation par rapport au temps (dn/dt) de la vitesse de déplacement (n), à une valeur de fonction d'apprentissage d'une fonction d'apprentissage (I(t)).

6. Dispositif de commande électronique selon la revendication 5, **caractérisé en ce que** l'unité de calcul est conçue pour le calcul préalable de la valeur de fonction d'apprentissage de la fonction d'apprentissage (I(t)), en fonction d'au moins une valeur de paramètre précédente.

7. Dispositif de commande électronique selon l'une des revendications précédentes, **caractérisé en ce que** l'unité de calcul est conçue pour la détermination d'une valeur de départ du paramètre ($A_{SO}$, A) en tant que variation de celui-ci.

8. Dispositif de commande électronique selon la revendication 7, **caractérisé en ce que** l'unité de calcul est conçue pour la détermination de la valeur de départ en fonction de la vitesse de déplacement maximale (nmax) dans la plage de déplacement du mouvement de démarrage.

9. Dispositif de commande électronique selon la revendication 7, **caractérisé en ce que** l'unité de calcul est conçue pour la détermination de la valeur de départ à partir d'une relation mathématique de la vitesse de déplacement avant l'immobilisation de l'entraînement, et de la vitesse de déplacement maximale (nmax) dans la plage de déplacement du mouvement de démarrage.

10. Dispositif de commande électronique selon la revendication 7, **caractérisé en ce que** la valeur de départ peut être lue dans une mémoire, en tant que valeur prescrite.

11. Dispositif de commande électronique selon l'une des revendications précédentes,
**caractérisé en ce que**
l'unité de calcul est conçue pour insérer dans la fonction, au moins une valeur d'entrée, notamment une valeur de temps et/ou une valeur de chemin de déplacement, et
pour délivrer en sortie de la fonction, au moins une valeur de sortie, qui correspond notamment au seuil de réponse (s(t)).

12. Dispositif de commande électronique selon l'une des revendications précédentes,
**caractérisé en ce que** la fonction est adaptée à un comportement de régime transitoire du mouvement de démarrage.

13. Dispositif de commande électronique selon la revendication 12,
**caractérisé en ce que**
la fonction est une fonction qui, d'après la valeur absolue, est décroissante au moins par secteurs, notamment décroissante de manière continue.

14. Dispositif de commande électronique selon l'une des revendications précédentes,
**caractérisé en ce que**
la fonction est une fonction linéaire.

15. Dispositif de commande électronique selon l'une des revendications 8 à 13,
**caractérisé en ce que**
la fonction est une fonction logarithmique.

16. Dispositif de commande électronique selon l'une des revendications 8 à 13,
**caractérisé en ce que**
la fonction est une fonction exponentielle.

17. Dispositif de commande électronique selon l'une des revendications précédentes,
**caractérisé en ce que**
l'unité de calcul est conçue pour activer un algorithme destiné à stopper, lors du dépassement du seuil de réponse (s(t)) à l'aide de la détermination du maximum (n max) de la vitesse de déplacement (n) du mouvement de démarrage.

18. Procédé de commande d'un dispositif d'actionnement de déplacement, notamment d'un système lève-vitre d'un véhicule automobile, d'après lequel un mouvement d'actionnement de déplacement de l'entraînement est stoppé, ou bien un processus pour stopper le mouvement d'actionnement de déplacement de l'entraînement est démarré, lorsqu'un signal (dn/dt, n) en corrélation avec le couple de l'entraînement, passe au-dessus d'un seuil de réponse (s(t)), le seuil de réponse (s(t)) étant, dans la plage de déplacement d'un mouvement de démarrage à partir d'un état immobile de l'entraînement, une fonction prédéterminée dépendant du chemin de déplacement ou du temps de déplacement, avec au moins un paramètre ($A_{SO}$, A, A', m) déterminant une loi de variation de cette fonction,
**caractérisé en ce que**
l'on fait varier la valeur de ce paramètre ($A_{SO}$, A, A', m) en fonction d'une variation par rapport au temps (dn/dt) d'une vitesse de déplacement (n) du mouvement de démarrage de l'entraînement.

19. Procédé selon la revendication 18,
**caractérisé en ce que**
le mouvement de démarrage est déterminé par mesure d'une vitesse de déplacement (n), et
la variation de la valeur de paramètre s'effectue en fonction d'une ou de plusieurs vitesses de déplacement (n) mesurées.

20. Procédé selon la revendication 18 ou la revendication 19,
**caractérisé en ce que**
le mouvement de démarrage est déterminé par mesure d'un courant absorbé par l'entraînement, et
la variation de la valeur de paramètre s'effectue en fonction d'une ou de plusieurs valeurs de courant du mouvement de démarrage.

21. Procédé selon l'une des revendications 18 à 20,
**caractérisé en ce que**
l'on effectue de manière continuelle un calcul pour la variation de la valeur de paramètre, par la détermination de la valeur actuelle du paramètre ($A_{SO}$, A, m) en fonction de la valeur précédente du paramètre ($A_{SO}$, A, m) et de la valeur actuelle du signal (dn/dt, n) en corrélation avec le couple, notamment la variation par rapport au temps (dn/dt) de la vitesse de déplacement (n).

22. Procédé selon l'une des revendications 18 à 21,
**caractérisé en ce que**
l'on effectue un calcul pour faire varier la valeur du paramètre en fonction de la détection d'un minimum du signal (dn/dt, n) en corrélation avec le couple, notamment la variation par rapport au temps (dn/dt) de la vitesse de déplacement (n).

23. Procédé selon la revendication 22,
**caractérisé en ce que**
l'on effectue un calcul pour faire varier la valeur du paramètre en fonction de la valeur du signal corrélé à l'instant de détection (t.",) du minimum du signal en corrélation avec le couple (dn/dt).

24. Procédé selon l'une des revendications 18 à 23,

**caractérisé en ce que**
la variation de la valeur de paramètre est effectuée en fonction d'une relation mathématique du signal (dn/dt, n) en corrélation avec le couple, notamment la variation par rapport au temps (dn/dt) de la vitesse de déplacement (n), à une valeur de fonction d'apprentissage d'une fonction d'apprentissage (l(t)).

25. Procédé selon la revendication 24,
**caractérisé en ce que**
l'on calcule au préalable la valeur de fonction d'apprentissage de la fonction d'apprentissage (l(t)) en fonction d'au moins une valeur de paramètre précédente.

26. Procédé selon l'une des revendications 18 à 25,
**caractérisé en ce que**
l'on détermine pour la variation, une valeur de départ du paramètre ($A_{SO}$, A).

27. Procédé selon la revendication 26,
**caractérisé en ce que**
la valeur de départ est déterminée en fonction de la vitesse de déplacement maximale (nmax) dans la plage de déplacement du mouvement de démarrage.

28. Procédé selon la revendication 26,
**caractérisé en ce que**
la valeur de départ est déterminée à partir d'une relation mathématique de la vitesse de déplacement avant l'immobilisation de l'entraînement, et de la vitesse de déplacement maximale (nmax) dans la plage de déplacement du mouvement de démarrage.

29. Procédé selon la revendication 26,
**caractérisé en ce que**
la valeur de départ est lue dans une mémoire, en tant que valeur prescrite.

30. Procédé selon l'une des revendications 18 à 29,
**caractérisé en ce que**
l'on insère dans la fonction, au moins une valeur d'entrée, notamment une valeur de temps et/ou une valeur de chemin de déplacement, et
on délivre en sortie de la fonction, au moins une valeur de sortie, qui correspond notamment au seuil de réponse (s(t)).

31. Procédé selon l'une des revendications 18 à 30, **caractérisé en ce que**
la fonction est adaptée à un comportement de régime transitoire du mouvement de démarrage.

32. Procédé selon la revendication 31,
**caractérisé en ce que**
la fonction est une fonction qui, d'après la valeur absolue, est décroissante au moins par secteurs, notamment décroissante de manière continue.

33. Procédé selon l'une des revendications 18 à 32,
**caractérisé en ce que**
la fonction est une fonction linéaire.

34. Procédé selon l'une des revendications 18 à 32,
**caractérisé en ce que**
la fonction est une fonction logarithmique.

35. Procédé selon l'une des revendications 18 à 34,
**caractérisé en ce que**
la fonction est une fonction exponentielle.

36. Procédé selon l'une des revendications 18 à 35,
**caractérisé en ce que**
l'on active un algorithme destiné à stopper, lors du dépassement du seuil de réponse à l'aide de la détermination du maximum (n max) de la vitesse de déplacement (n) du mouvement de démarrage.

37. Dispositif de commande électronique selon la revendication 1 d'un entraînement de système lève-vitre d'un véhicule automobile,
**caractérisé par**

- des moyens d'attaque pour l'alimentation en courant d'un entraînement de système lève-vitre, et
- des moyens de détection pour détecter le mouvement de déplacement de l'entraînement de système lève-vitre.

38. Système lève-vitre d'un véhicule automobile, comprenant

- un entraînement de système lève-vitre pour déplacer la position d'une vitre, par un couplage mécanique entre l'entraînement de système lève-vitre et la vitre au moyen d'un système de traction à câble, qui est relié à la vitre et à un tambour à câble, le tambour à câble interagissant mécaniquement avec l'entraînement de système lève-vitre, et
- un dispositif de commande selon la revendication 37.

# FIG 1

# FIG 2

# FIG 3

**IN DER BESCHREIBUNG AUFGEFÜHRTE DOKUMENTE**

**In der Beschreibung aufgeführte Patentdokumente**

- DE 19745597 A1
- DE 19517958
- DE 19514257 C1